# EUROPEAN PATENT APPLICATION

(11) **EP 4 691 889 A1**
(43) Date of publication of application: **11.02.2026**
(21) Application number: 25757859.1
(22) Date of filing: 21.04.2025
(51) Int. Cl.: B62D 55/084, B62D 55/065, B62D 55/14, B62D 55/10

(54) **TRACKED CHASSIS DEVICE, TRACKED VEHICLE, AND ADJUSTMENT METHOD AND SYSTEM, AND READABLE STORAGE MEDIUM**

(30) Priority: 30.08.2024 CN 202411215445
(71) Applicant: Jiangsu XCMG Construction Machinery Research Institute Ltd., Xuzhou, Jiangsu 221004 (CN)
(72) Inventor: NI, Kun, Xuzhou, Jiangsu 221004 (CN); CHEN, Chang, Xuzhou, Jiangsu 221004 (CN); XIE, Fengbo, Xuzhou, Jiangsu 221004 (CN)
(74) Representative: Specht, Peter
(86) International application number: PCT/CN2025/090070
(87) International publication number: WO 2025/176226

(57) **Abstract**

The present disclosure relates to a crawler chassis apparatus, a tracked vehicle, an adjusting method and system and a readable storage medium, and relates to the field of engineering machinery, for enabling the crawler chassis apparatus to normally travel when two crawler traveling apparatuses are located on different working surfaces or on a working surface with a relatively large slope. The crawler chassis apparatus comprises a chassis mount, at least two crawler traveling apparatuses, and at least one attitude adjusting apparatus. The chassis mount is fixedly connected with a chassis superstructure. The chassis mount is located between two crawler traveling apparatuses, and each of the crawler traveling apparatuses is configured to be able to travel. An attitude adjusting apparatus is disposed between the at least one crawler traveling apparatus and the chassis mount. The attitude adjusting apparatus is configured to adjust an attitude of the crawler traveling apparatus relative to the chassis mount. By the attitude adjusting apparatus, when the crawler chassis apparatus is on different working surfaces or on a working surface with a relatively large slope, both crawler traveling apparatuses can contact the road surface, thus improving the traveling capability of the crawler chassis apparatus under various road conditions.

## Description

### CROSS-REFERENCE TO RELATED APPLICATIONS

The present disclosure is based on and claims priority to the Chinese application No. 202411215445.1, filed on August 30, 2024, the disclosure of which is hereby incorporated by reference in its entirety into the present disclosure.

### BACKGROUND OF THE INVENTION

### Field of the Invention

The present disclosure relates to the field of engineering machinery, and specifically relates to a crawler chassis apparatus, a tracked vehicle, a method and system, and a readable storage medium.

### Description of Related Art

Tracked engineering mechanical equipment has very wide application. The chassis traveling devices on two sides of most tracked engineering mechanical equipment are positioned on the same flat working surface or a small-angle working surface.

The inventors have found that at least the following problem exists in the prior art: there is no better solution to enable the chassis traveling devices on two sides to normally run when the chassis traveling devices on two sides are not on the same working surface or on a working surface with a relatively large slope.

### SUMMARY OF THE INVENTION

The present disclosure proposes a crawler chassis apparatus, a tracked vehicle, an adjusting method and system, and a readable storage medium, for enabling the crawler chassis apparatus to normally travel when twocrawler traveling mechanisms are located on different working surfaces or on a working surface with a relatively large slope.

Some embodiments of the present disclosure provide a crawler chassis apparatus, including:
a chassis mount configured to be fixedly connected with a chassis;
at least twocrawler traveling mechanisms, the chassis mount being located between two of thecrawler traveling mechanisms; each of thecrawler traveling mechanisms being configured to be walkable; and
at least one attitude adjusting apparatus disposed between at least one of the crawler traveling mechanisms and the chassis mount, the attitude adjusting apparatus being configured to adjust an attitude of the crawler traveling apparatus relative to the chassis mount.

In some embodiments, the attitude adjusting apparatus includes:
a position adjustment assembly disposed between the attitude mount and the attitude adjusting apparatus, the position adjustment assembly being configured to change a horizontal distance and a vertical height of the attitude adjusting apparatus relative to the chassis mount; and
an angle adjustment assembly disposed between the chassis mount and the attitude adjusting apparatus, the angle adjustment assembly being configured to adjust a rotation angle of the crawler traveling apparatus relative to the chassis mount.

In some embodiments, the angle adjustment assembly, the position adjustment assembly, the chassis mount, and the crawler traveling apparatus are configured to switch between the following states: forming a parallelogram mechanism, and forming a non-parallelogram mechanism.

In some embodiments, the position adjustment assembly includes:
a first cylinder, one end being rotatably connected with the chassis mount, and the other end being rotatably connected with the crawler traveling apparatus; and
a first link, the first link being arranged spaced apart from the first cylinder; one end of the first link being rotatably connected with the chassis mount, and the other end of the first link being rotatably connected with the crawler traveling apparatus.

In some embodiments, wherein the first cylinder is connected to the chassis mounting frame at a first hinge point, the first link is connected to the chassis mounting frame at a second hinge point, and the first hinge point and the second hinge point are located at different positions around the chassis mounting frame.

In some embodiments, the other end of the first link is rotatably connected with the crawler traveling apparatus by a first pin shaft, and the angle adjustment assembly comprises:
a second cylinder, one end being rotatably connected with the chassis mount, and the other end of the second cylinder being rotatably connected with the crawler traveling apparatus by a second pin shaft; the first pin shaft being parallel to the second pin shaft;
the attitude adjusting apparatus further includes: a first connecting plate and a second connecting plate arranged in parallel; the first connecting plate and the second connecting plate are both fixedly connected with the crawler traveling apparatus; one end of the first connecting plate is rotatably connected with the first pin shaft, and the other end of the first connecting plate is rotatably connected with the second pin shaft;
one end of the second connecting plate is rotatably connected with the first pin shaft, and the other end of the second connecting plate is rotatably connected with the second pin shaft.

In some embodiments, the number of the first link is two, there are two second cylinders, and the first links and the second cylinders are in one-to-one correspondence; the first cylinder is located between the two first links.

In some embodiments, a third pin shaft is mounted at the other end of the first cylinder, and the rotation axis of the third pin shaft coincides with the rotation axis of the first pin shaft.

In some embodiments, there are two attitude adjusting apparatuses, the crawler traveling mechanisms are divided into two groups, and one attitude adjusting apparatus is mounted between each group of the crawler traveling mechanisms and the chassis mount.

In some embodiments, the crawler traveling mechanisms include:
a track frame, the attitude adjusting apparatus being mounted to the track frame;
a track mounted to the track frame;
a support roller assembly pressing the track;
a swinging frame, one end being rotatably connected with the track frame, the support roller assembly being mounted at the other end, and the swinging frame rotatable relative to the track frame so as to drive the support roller assembly to press the track; and
a telescopic assembly, one end being rotatably mounted on the track frame, and the other end being rotatably connected with the middle part of the swinging frame; the telescopic assembly being configured to enable the swinging frame to rotate around a part of rotatable connection of the swinging frame and the track frame through extension/retraction.

In some embodiments, the support roller assembly includes:
a first mounting frame arranged adjacent to the track;
a first support roller rotatably mounted to the first mounting frame;
a second mounting frame arranged spaced apart from the first mounting frame;
a second support roller arranged spaced apart from the first support roller; the second support roller being rotatably mounted to the second mounting frame; and
a universal joint assembly arranged between the first mounting frame and the second mounting frame, the first mounting frame being rotatably connected with one end of the universal joint assembly, and the second mounting frame being rotatably connected with the other end of the universal joint assembly; the middle part of the universal joint assembly being rotatably connected with the other end of the swinging frame.

In some embodiments, the rotatable shaft of the middle part of the universal joint assembly and the other end of the swinging frame is perpendicular to the traveling direction of the crawler traveling apparatus.

Some embodiments of the present disclosure provide a tracked vehicle including the crawler chassis apparatus provided by any technical solution of the present disclosure.

In some embodiments, the tracked vehicle is a gutter cleaning apparatus.

In some embodiments, twocrawler traveling mechanisms of the tracked vehicle are located at different heights.

In some embodiments, the treads of two of the crawler traveling mechanisms intersect, and an comprised angle between them is greater than 0° and less than 90°.

Some embodiments of the present disclosure further provide a crawler chassis apparatus attitude adjusting method, comprising the following steps:
acquiring a travel speed of the tracked vehicle provided by any technical solution of the present disclosure;
detecting a tilt angle and a tilt direction of a chassis superstructure of the tracked vehicle;
determining whether the tilt angle is greater than a first set value;
if the tilt angle is greater than the first set value, stopping the tracked vehicle, and adjusting the position adjustment assembly of the attitude adjusting apparatus corresponding to the crawler traveling apparatus on the inclined side according to the tilt direction.

In some embodiments, after stopping the tracked vehicle, the crawler chassis apparatus attitude adjusting method further includes the following step:
if the road surface is hard, activating the angle adjustment assembly of the tracked chassis until the crawler chassis apparatus is in contact with the road surface.

In some embodiments, the crawler chassis apparatus attitude adjusting method further includes the following steps:
if the tilt angle is less than or equal to the first set value, determining whether the tilt angle is greater than a second set value;
if the tilt angle is greater than the second set value, reducing the travel speed of the tracked vehicle;
if the road surface is hard, activating the angle adjustment assembly of the crawler chassis apparatus until the crawler chassis apparatus is in contact with the road surface;
if the road surface is soft, the crawler chassis apparatus performs adaptive adjustment.

In some embodiments, if the tilt angle is less than or equal to the second set value, the travel speed of the tracked vehicle remains unchanged;
if the road surface is hard, activating the angle adjustment assembly of the crawler chassis apparatus until the crawler chassis apparatus is in contact with the road surface; if the road surface is soft, the crawler chassis apparatus performs adaptive adjustment.

Some embodiments of the present disclosure further provide a crawler chassis apparatus attitude adjusting system, including:
a memory; and
a processor coupled to the memory, the processor being configured to perform a crawler chassis apparatus attitude adjusting method as provided by any technical solution of the present disclosure based on instructions stored in the memory.

Some embodiments of the present disclosure further provide a computer-readable storage medium, on which a computer program is stored, and the program, when executed by the processor, implements a crawler chassis apparatus attitude adjusting method as provided by any technical solution of the present disclosure.

The crawler chassis apparatus provided by the above-mentioned technical solutions includes a chassis mount, twocrawler traveling mechanisms and at least one attitude adjusting apparatus. The attitude of thecrawler traveling mechanisms relative to the chassis mount can be adjusted by the attitude adjusting apparatus, and the attitude described here comprises a horizontal distance, a vertical distance and a rotation angle. By the attitude adjusting apparatus, no matter whether the crawler chassis apparatus is traveling on different working surfaces or on a working surface with a relatively large slope, bothcrawler traveling mechanisms can contact the road surface, thus achieving traveling capability of the crawler chassis apparatus under various road conditions and improving the load-bearing capacity.

### BRIEF DESCRIPTION OF THE DRAWINGS

Figure 1 is a schematic view of the connection relationship between a crawler chassis apparatus provided by some embodiments of the present disclosure and a chassis superstructure.
Figure 2 is a partially enlarged view of Figure 1.
Figure 3 is a schematic view of the three-dimensional structure of the crawler chassis apparatus provided by some embodiments of the present disclosure.
Figure 4 is a schematic front view of the crawler chassis apparatus provided by some embodiments of the present disclosure.
Figure 5 is a partially enlarged view of Figure 4.
Figure 6 is a schematic view of the three-dimensional structure of a support roller assembly of the crawler chassis apparatus provided by some embodiments of the present disclosure.
Figure 7 is a schematic view of the tilt angle position of the crawler chassis apparatus provided by some embodiments of the present disclosure.
Figure 8 is a schematic view of a crawler chassis apparatus attitude adjusting method provided by some embodiments of the present disclosure.

### Reference signs:

1. chassis mount; 2. crawler chassis apparatus; 3. attitude adjusting apparatus; 4. chassis superstructure; 11. square tube; 12. mounting plate; 121. mounting hole; 21. track frame; 22. track; 23. support roller assembly; 24. swinging frame; 25. telescopic assembly; 26. tensioning mechanism; 27. driving mechanism; 261. tensioning wheel; 262. pressing device; 231. first mounting frame; 232. first support roller; 233. second mounting frame; 234. second support roller; 235. universal joint assembly; 31. position adjustment assembly; 32. angle adjustment assembly; 33. first connecting plate; 34. second connecting plate; 311. first cylinder; 312. first link; 313. first pin shaft; 314. second pin shaft; 315. third pin shaft; 321. second cylinder.

### DESCRIPTION OF THE INVENTION

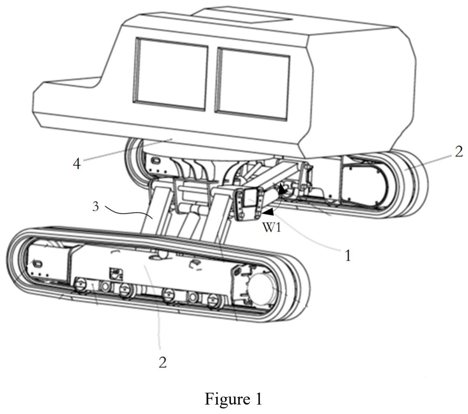

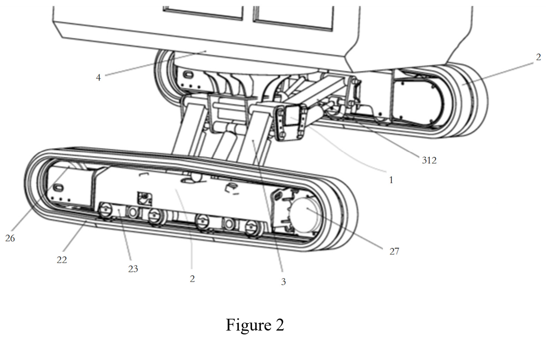

The technical solutions provided by the present disclosure are set forth below in more detail with reference to Figures 1 to 8. The description of exemplary embodiments is merely illustrative and in no way serves as any limitation to the present disclosure and its application or use. The present disclosure may be implemented in many different forms, not limited to the embodiments introduced herein. These embodiments are provided in order to make the present disclosure thorough and complete, and will fully convey the scope of the present disclosure to those skilled in the art. It should be noted that: unless specifically stated otherwise, the relative arrangement of parts and steps, the components of materials, the numerical expressions and numerical values set forth in these embodiments are to be construed as merely exemplary and not limiting.

The terms "first", "second" and similar words used in the present disclosure do not indicate any sequence, quantity or importance, but are merely used to distinguish different parts. The word "include" or "comprise" or the like means that the element preceding the word covers the elements listed after the word, and it does not exclude the possibility of also covering other elements.

In the description of the present disclosure, it is to be understood that, the orientations or positional relationships indicated by terms such as "center", "longitudinal" "transverse", "front", "rear", "left", "right", "vertical", "horizontal", "top", "bottom", "inner", "outer" are orientations or positional relationships based on the drawings, and they are only for the purpose of facilitating describing the present disclosure and simplifying the description, instead of indicating or suggesting that the described device or element must have a specific orientation and must be configured and operated in a specific orientation, so that they cannot be construed as limitation of the content protected by the present disclosure. When the absolute position of the described object changes, the relative positional relationship may also change accordingly.

In the present disclosure, when a specific device is described as being located between a first device and a second device, an intervening device may be present between the specific device and the first device or the second device, or there may be no intervening device. When a specific device is described as being connected with another device, the specific device may be directly connected with the other device with no intervening device, or it may be indirectly connected with the other device with a device therebetween.

All terms, including technical terms or scientific terms, used in the present disclosure have the same meaning as understood by those of ordinary skill in the art to which the present disclosure belongs, unless specifically defined otherwise. It should also be understood that the terms as defined in commonly used dictionaries should be interpreted as having a meaning that is consistent with their meaning in the context of relevant art and shall not be interpreted in an idealized or overly formal sense, unless expressly so defined herein.

Techniques, methods and devices known to those of ordinary skill in the relevant field may not be discussed in detail, but, where appropriate, the techniques, methods, and devices shall be considered as part of the description.

The dimensions of various parts shown in the drawings are not drawn in accordance with actual proportional relationships. In the drawings, identical reference signs are assigned to common structural elements or structural elements of the same type, and repeated descriptions thereof are appropriately omitted.

Referring to Figures 1-3, some embodiments of the present disclosure provide a crawler chassis apparatus, which applies to places with a large tilt angle, as well as cleaning of expressway gutters. The crawler chassis apparatus comprises a chassis mounting frame 1, at least twocrawler traveling mechanisms 2 and at least one attitude adjusting apparatus 3. The chassis mounting frame 1 is configured to be fixedly connected with a chassis superstructure 4. The chassis mounting frame 1 is located between twocrawler traveling mechanisms 2. The chassis mounting frame 1 is supported and carried by the twocrawler traveling mechanisms 2, and the chassis mounting frame 1 is enabled to travel with the twocrawler traveling mechanisms 2. Each crawler traveling apparatus 2 is configured to be able to travel, and each crawler traveling apparatus 2 is configured to be able to travel independently and may also be configured to travel passively. An attitude adjusting apparatus 3 is disposed between the chassis mounting frame 1 and a crawler traveling apparatus 2, and the attitude adjusting apparatus 3 is configured to adjust an attitude of the crawler traveling apparatus 2 connected thereto with respect to the chassis mounting frame 1. The attitude of the crawler traveling apparatus(s) 2, to which the attitude adjusting apparatus 3 is connected, with respect to the chassis mounting frame 1, is adjusted.

The crawler chassis apparatus is specifically, for example, a double-track chassis device, a four-track chassis device and the like. For a double-track chassis device, there is one crawler traveling apparatus 2 on each side of the crawler chassis apparatus in the width direction. For a four-track chassis device, there are two crawler traveling mechanisms 2 on each side of the crawler chassis apparatus in the width direction.

The attitude adjusting apparatus 3 is capable of attitude adjustment when the crawler chassis apparatus is in a traveling state or a static state, so as to improve the safety and the efficiency of the traveling operation of the crawler chassis apparatus.

The chassis mounting frame 1 is used for connecting the chassis superstructure and two crawler traveling mechanisms 2. The chassis mounting frame 1 is fixedly connected with the chassis superstructure, for example, by welding or bolts, or by another method of fixed connection which is removable or not removable. The crawler traveling mechanisms 2 are connected with the chassis mounting frame 1. The attitude of the crawler traveling mechanisms 2 with respect to the chassis mounting frame 1 is configured to be adjustable. Specifically, in some embodiments, one of the crawler traveling mechanisms 2 is set to be attitude adjustable, and in other embodiments, both crawler traveling apparatus 2 are arranged to be attitude adjustable.

On some occasions, for example, in the cleaning of a gutter alongside an expressway, the gutter has a small width and cannot accommodate twocrawler traveling mechanisms 2. In this case, one crawler traveling apparatus 2 is placed on the roadbed of the expressway, and the other crawler traveling apparatus 2 is placed within the gutter. In this case, the heights of the twocrawler traveling mechanisms 2 are different, but the treads of the twocrawler traveling mechanisms 2 are parallel to each other. The tread of thecrawler traveling mechanisms 2 is a surface of the crawler traveling mechanisms 2 in contact with the road surface, and it is also the maximum extension surface of track 22. Thecrawler traveling mechanisms 2 are in contact with the road surface, avoiding twisting of thecrawler traveling mechanisms 2 on two sides, such that the tread of the track 22 (i.e., the bottom surface of the track 22) are in good contact with the road surface, improving the traveling and operation safety.

In other occasions, for example, where the road is relatively narrow and right next to the road is a slope, one of the crawler traveling mechanisms 2 is on the road surface and the othercrawler traveling mechanisms 2 is on the slope. In this case, the twocrawler traveling mechanisms 2 are at different heights, the treads of the two crawler traveling mechanisms 2 form an comprised angle which is equal to the gradient of the slope.

Referring to Figures 1 to 3, the chassis mounting frame 1 comprises a square tube 11 and a mounting plate 12. A plurality of mounting plates 12 are mounted along a longitudinal direction of the square tube 11. Each mounting plate 12 is provided with a mounting hole 121, and the square tube 11 passes through the mounting holes 121 of respective mounting plates 12. Through combined action of the square tube 11 and the mounting plates 12, the chassis mounting frame 1 is conveniently connected with both the chassis superstructure and the attitude adjusting apparatus 3. The circumferential direction of the chassis mounting frame 1 refers to an outer periphery of the square tube 11.

The twocrawler traveling mechanisms 2 are distributed on two sides of the chassis mounting frame 1, and the twocrawler traveling mechanisms 2 jointly support the chassis superstructure to realize traveling of the tracked vehicle.

The attitude adjusting apparatus 3 is used for adjusting an attitude of the crawler traveling mechanisms 2 relative to the chassis mounting frame 1: if the number of the attitude adjusting apparatus 3 is one, the attitude of one of thecrawler traveling mechanisms 2 relative to the chassis mounting frame 1 is adjustable; if the number of the attitude adjusting apparatus 3 is two, each attitude adjusting apparatus 3 is used for adjusting the attitude of one crawler traveling apparatus 2, and the attitudes of both crawler traveling apparatus 2 relative to the chassis mounting frame 1 are adjustable, and they are adjusted independently from each other without interfering with each other. Independent adjustment means that: change of the attitude of one of thecrawler traveling mechanisms 2 relative to the chassis mounting frame 1 does not affect the attitude of the other crawler traveling apparatus 2 relative to the chassis mounting frame 1.

The crawler chassis apparatus provided by the above-mentioned technical solution is provided with an attitude adjusting apparatus 3 between at least one crawler traveling apparatus 2 and the chassis mounting frame 1, and the attitude adjusting apparatus 3 can adjust the position and the rotation angle of the crawler traveling apparatus 2. Position adjustment refers to adjustment of at least one of a horizontal distance and a vertical distance, and adjustment of rotation angle is adjustment of an angle. When adjustment is carried out, only the position or the rotation angle is adjusted, or the position and the rotation angle are adjusted simultaneously. Specifically, the position refers to the horizontal distance and the vertical distance of the crawler traveling apparatus 2 relative to the chassis mounting frame 1, i.e. it is adjusted how far and how high the crawler traveling apparatus 2 is relative to the chassis mounting frame 1.

Hereinafter, description is made with an example in which the attitude of both crawler traveling mechanisms 2 is adjustable. One attitude adjusting apparatus 3 is mounted between each crawler traveling apparatus 2 and the chassis mounting frame 1. The number of the attitude adjusting apparatus 3, which the crawler chassis apparatus comprises, is two.

Each crawler traveling apparatus 2 is equipped with an independent attitude adjusting apparatus 3. The twocrawler traveling mechanisms 2 have the same structure, and the two attitude adjusting apparatuses 3 also have the same structure. The two crawler traveling mechanisms 2 are connected to the respective attitude adjusting apparatuses 3 in the same relationship, except that the respective attitude adjusting apparatuses 3 are correspondingly mounted on different sides of the chassis mounting frame 1. One of the crawler traveling mechanisms 2 and the attitude adjusting apparatus 3 corresponding thereto will be described hereinafter.

The attitude adjusting apparatus 3 are implemented in various manners, for example, it may be implemented by a pure mechanical structure, or an electrical component, a hydraulic component, a pneumatic component.

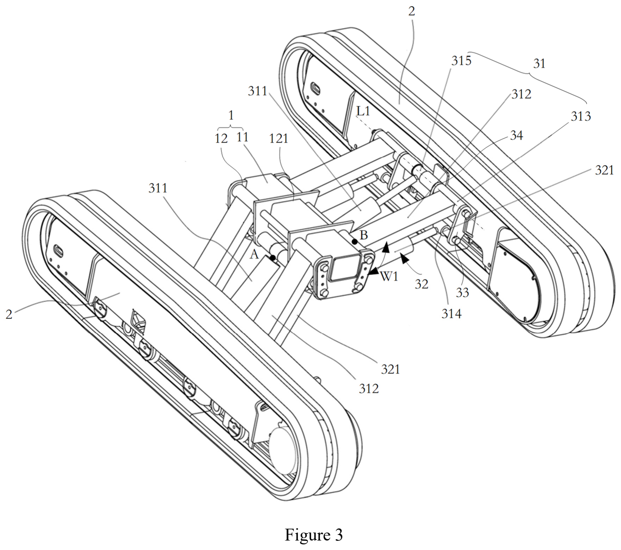

Referring to Figure 3, in some embodiments, the attitude adjusting apparatus 3 comprises a position adjustment assembly 31 and an angle adjustment assembly 32. The position adjustment assembly 31 is used to change the horizontal distance and the vertical height of the crawler traveling apparatus 2 relative to the chassis mounting frame 1. The position adjustment assembly 31 realizes adjustment of the position of the crawler traveling apparatus 2 by using an electrically driving mechanism, a hydraulically driving mechanism or the like.

With continued reference to Figure 3, the position adjustment assembly 31 specifically comprises a first cylinder 311 and a first link 312. One end of the first cylinder 311 (specifically a cylinder barrel end of the first cylinder 311) is rotatably connected with the chassis mount1, and the other end of the first cylinder 311 (specifically a piston rod end of the first cylinder 311) is rotatably connected with the crawler traveling apparatus 2. The first link 312 and the first cylinder 311 are arranged spaced apart, and the first link 312 is specifically a straight rod. One end of the first link 312 is rotatably connected with the chassis mounting frame 1, and the other end of the first link 312 is rotatably connected with the crawler traveling apparatus 2.

With continued reference to Figure 3, in some embodiments, the hinge point of the first cylinder 311 and the chassis mounting frame 1 is a first hinge point A, the hinge point of the first link 312 and the chassis mounting frame 1 is a second hinge point B, and first hinge point and the second hinge point are located at different positions in a circumferential direction of the chassis mount. It should be noted here that, for the reason of the viewing angle, the first hinge point A of the chassis mounting frame 1 and the first cylinder 311 on the right side is not visible in Figure 3, and what is shown in Figure 3 is the first hinge point A of the chassis mounting frame 1 and the first cylinder 311 on the left side. The second hinge point B of the chassis mounting frame 1 and the first link 312 on the left side is not visible in Figure 3, and what is shown in Figure 3 is the second hinge point B of the chassis mounting frame 1 and the first cylinder 311 on the right side.

In Figure 3, the other end of the first link 312 is rotatably connected with the crawler traveling apparatus 2 by a first pin shaft 313. A third pin shaft 315 is mounted at the other end of the first cylinder 311. The rotation axis of the third pin shaft 315 coincides with the rotation axis of the first pin shaft 313, and the coinciding rotation axis L1 is marked in Figure 3. The second pin shaft 314 is a position for rotatable connection of a second cylinder 321, which will be described later, and the crawler traveling apparatus 2.

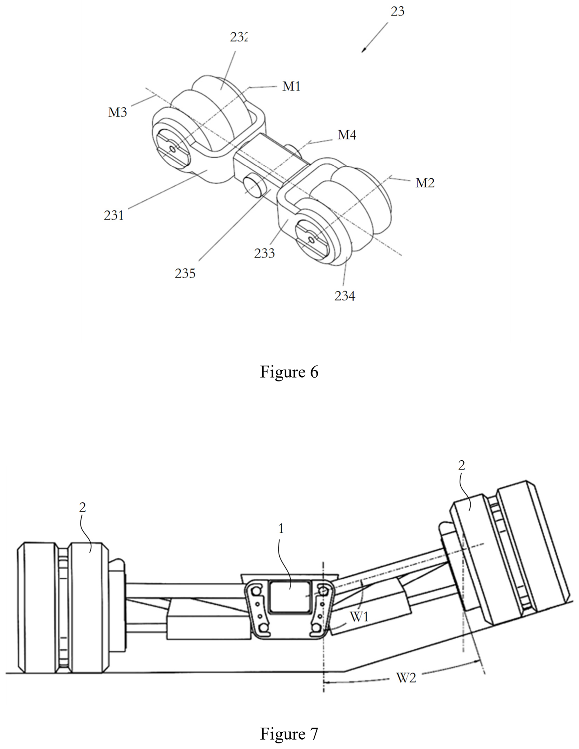

The above-described connection manner enables the first cylinder 311 and the first link 312 of the position adjustment assembly 31, the crawler traveling apparatus 2 and the chassis mounting frame 1 to jointly form a linkage mechanism. Since the crawler traveling apparatus 2 is very heavy, the entire linkage mechanism is always subjected to an action of gravity of the crawler traveling apparatus 2. When the vehicle runs to a bumpy stepped road surface, if the horizontal distance and the vertical distance of the crawler traveling apparatus 2 on an upper step relative to the chassis mounting frame 1 are not adjusted, the crawler traveling apparatus 2 on an upper step may not be able to contact the road surface. At this time, the first cylinder 311 needs to be adjusted to change the horizontal distance and the vertical distance of the crawler traveling apparatus 2 on an upper step relative to the chassis mounting frame 1. As the first cylinder 311 extends/retracts, the swing angle W1 (see Figure 3 or Figure 7) of the first link 312 relative to the chassis mounting frame 1 changes accordingly. The rotation range of the swing angle W1 is 60° ~ 120°, specifically, such as, 60°, 70°, 80°, 90°, 100°, 110° and 120°. Since the other end of the first link 312 is rotatably connected with the crawler traveling apparatus 2 and the other end of the first cylinder 311 is also rotatably connected with the crawler traveling apparatus 2, under the action of the self-gravity of the crawler traveling apparatus 2, change of the swing angle W1 of the first link 312 relative to the chassis mounting frame 1 will only change the horizontal distance and the vertical distance between the crawler traveling apparatus 2 and the chassis mounting frame 1, without changing the relative rotation angle between the crawler traveling apparatus 2 and the chassis mounting frame 1. Change of the horizontal distance and the vertical distance between the crawler traveling apparatus 2 and the chassis mounting frame 1 mainly enables the crawler traveling apparatus 2 to adapt to higher (lower) and closer (farther) road surfaces. The angle adjusting assembly 32 can enable the crawler traveling apparatus 2 to be always in close contact with the road surface.

The angle adjustment assembly 32 is disposed between the chassis mounting frame 1 and the attitude adjusting apparatus 3, and the angle adjustment assembly 23 is configured to adjust a rotation angle of the crawler traveling apparatus 2 relative to the chassis mounting frame 1. The angle adjustment assembly 32 is used to rotate the position of the crawler traveling apparatus 2 such that the crawler traveling apparatus 2 rotates about the chassis mounting frame 1, and specifically, about the rotation axis L1 (see Figure 3). The angle adjustment assembly 32 can be implemented in various ways. For example, it may drive the crawler traveling apparatus 2 to rotate in a manner of electric driving, and it may also drive the crawler traveling apparatus 2 to rotate in multiple manners such as hydraulic driving and electrical driving. Referring to Figure 3, in some embodiments, the angle adjustment assembly 32 comprises a second cylinder 321. The second cylinder 321 is mounted below the first link 312, and the first link 312 and the second cylinder 321 are substantially parallel. The second cylinder 321, the crawler traveling apparatus 2, the first link 312, and the chassis mounting frame 1 substantially form a quadrangle. Adjustment of the length of the second cylinder 321 can make the quadrangle substantially form a parallelogram. When the length of the second cylinder 321 is adjusted to be equal to the length of the first link 312, the quadrangle is a parallelogram.

In some embodiments, the angle adjustment assembly 32, the position adjustment assembly 31, the chassis mounting frame 1, and the crawler traveling apparatus 2 are configured to switch between a parallelogram mechanism and a non-parallelogram mechanism. By changing the length of the angle adjustment assembly 32, i.e., by changing the length through extension/retraction of the second cylinder 321, the mechanism switches between a parallelogram mechanism and a non-parallelogram mechanism.

The first link 312, the chassis mounting frame 1, the second cylinder 321 and the crawler traveling apparatus 2 together form a four-link swinging mechanism. According to the four-link characteristic, the extension/retraction of the first cylinder 311 will change the swing angle W1 (see Figure 3) of the first link 312 relative to the chassis mounting frame 1, thereby driving the position and the swing angle of the crawler traveling apparatus 2 to change. After the first cylinder 311 is extended/retracted and locked, in the case where the second cylinder 321 is not extended/retracted, the swinging mechanism will be locked, and at this time the crawler traveling apparatus 2 is maintained at a fixed position with respect to the chassis mounting frame 1.

Further, in the four-link deflection mechanism composed of the first link 312, the chassis mounting frame 1, the first cylinder 311 and the crawler traveling apparatus 2, extension/retraction of the second cylinder 321 can adjust the position and the swing angle of the crawler traveling apparatus 2 relative to the chassis mounting frame 1.

In order to reduce the difficulty of control, in some embodiments, the initial length of the second cylinder 321 is set to be equal to the length of the first link 312, so that the four-link swinging mechanism forms a parallelogram structure. Further, the rotation axis of the first cylinder 311 and the crawler traveling apparatus 2 and the rotation axis of the first link 312 and the crawler traveling apparatus 2 are set to coincide (i.e., L1, see Figure 3). At this time, the first link 312, the chassis mounting frame 1, and the first cylinder 311 form a triangular mechanism. At this time, the telescoping change of the first cylinder 311 changes the swing angle W1 of the first link 312 relative to the chassis mounting frame 1, which will only change the vertical height and the horizontal position of the crawler traveling apparatus 2 relative to the chassis mounting frame 1. After the first cylinder 311 is locked, the triangular mechanism will be fixed. At this time, adjustment of the extension/retraction of the second cylinder 321 will only change the rotation angle W2 of the crawler traveling apparatus 2 relative to the chassis mounting frame 1 (see Figure 7). The rotation angle W2 ranges from -30° to 30°, specifically, -30°, -20°, -10°, 0°, 10°, 20°, and 30°.

The process of adjusting the attitude of the track on a slope is as follows: in an initial state, the length of the second cylinder 321 is equal to the length of the first link 312; the length of the first cylinder 311 is adjusted according to the deflection angle of the chassis superstructure, to change the swing angle W1 of the first link 312 relative to the chassis mounting frame 1, thus driving the position of the crawler traveling apparatus 2 relative to the chassis mounting frame 1 to change. Due to the structural characteristic of a parallelogram, the bottom surface of the crawler traveling apparatus 2 is always parallel to the road surface.

In order to prevent the bottom surface of the crawler traveling apparatus 2 from being affected by torsion, it is needed to adjust the telescoping length of the second cylinder 321 and change the rotation angle W2 of the crawler traveling apparatus 2 relative to the chassis mounting frame 1, to keep the bottom surface of the crawler traveling apparatus 2 and the slope surface on the same plane.

According to the size of the deflection angle of the chassis superstructure, it is possible to choose to perform attitude adjustment in a static state of the crawler chassis apparatus, or perform attitude adjustment in the case where the speed of the crawler chassis apparatus is reduced, or perform attitude adjustment in the case where the speed of the crawler chassis apparatus is maintained.

With continued reference to Figure 3, the angle adjustment assembly 32 comprises the second cylinder 321, as described above. One end of the second cylinder 321 is rotatably connected with the chassis mounting frame 1, and the other end of the second cylinder 321 is rotatably connected with the crawler traveling apparatus 2 by a second pin shaft 314. The first pin shaft 313 is parallel to the second pin shaft 314. The attitude adjusting apparatus 3 further includes a first connecting plate 33 and a second connecting plate 34 arranged in parallel. The first connecting plate 33 and the second connecting plate 34 are both fixedly connected with the crawler traveling apparatus 2, and specifically, fixed to the track frame 21 by welding or connected to the track frame by a bolt. One end of the first connecting plate 33 is rotatably connected with the first pin shaft 313, and the other end of the first connecting plate 33 is rotatably connected with the second pin shaft 314. One end of the second connecting plate 34 is rotatably connected with the first pin shaft 313, and the other end of the second connecting plate 34 is rotatably connected with the second pin shaft 314.

With continued reference to Figure 3, two first links 312, one first cylinder 311 and two second cylinders 321 are provided between the chassis mounting frame 1 and either crawler traveling apparatus 2. The first links 312 and the second cylinders 321 are in one-to-one correspondence, and the first cylinder 311 is located between the two first links 312. There is a large number of connection parts between the chassis mounting frame 1 and either crawler traveling apparatus 2, and the connection positions are dispersed, so that the load-bearing capacity of the crawler chassis apparatus is sufficiently strong.

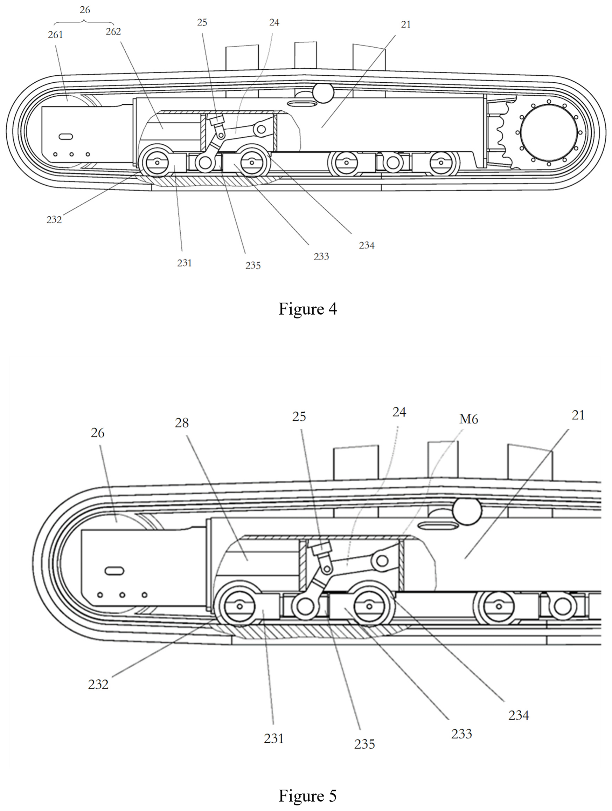

Referring to Figures 4 and 5, in some embodiments, the crawler traveling apparatus 2 comprises a track frame 21, a track 22, a support roller assembly 23, a swinging frame 24, and a telescopic assembly 25. The attitude adjusting apparatus 3 is mounted on the track frame 21. The track frame 21 serves as a load-bearing component for carrying the attitude adjusting apparatus 3 described above. The track 22 is mounted on the track frame 21, wound on its outer periphery and tensioned by a tensioning mechanism 26, and the track 22 is driven to travel by a driving mechanism 27. The tensioning mechanism 26 may move back and forth in a sliding manner relative to the track frame 21.

During the adjustment of the support roller assembly 23, the tensioning mechanism 26 keeps the track on an outer rim of the chassis traveling device tensioned by adjusting its own length (i.e., forward/backward sliding distance of the tensioning wheel 261). The support roller assembly 23 automatically adjusts the position of the support rollers according to the unevenness of the road surface to ensure that the crawler chassis apparatus is always kept in contact with the road surface.

The tensioning mechanism 26 includes a tensioning wheel 261 and a pressing device 262. The tensioning wheel 261 slides back and forth relative to the track frame 21 under the action of the pressing device 262, and presses the track 22 to maintain it in a tensioned state. When the road surface is uneven, and the support roller assembly 23 rotates back and forth or rotates to the left and right and presses the track 22, the pressing device 262 will reduce its own length and retract the tensioning wheel 261, to prevent the track 22 from being deformed, damaged or broken due to excessive tension.

The driving mechanism 27 provides forward or backward driving force to the crawler chassis apparatus. The driving mechanism 27 is capable of circular motion around its own axis of rotation.

One end of the swinging frame 24 is rotatably connected with the track frame 21, and the support roller assembly 23 is mounted at the other end of the swinging frame 24. The support roller assembly 23 presses the track 22 such that the track 22 is always in contact with the road surface. By adjusting the position of the swinging frame 24, the position of the support roller assembly 23 is changed accordingly, and the changed support roller assembly 23 can always press against the track 22. Specifically, the position of the swinging frame 24 can be changed by the telescopic assembly 25. One end of the telescopic assembly 25 is rotatably mounted to the track frame 21, and the other end of the telescopic assembly 25 is rotatably connected with the middle part of the swinging frame 24. The telescopic assembly 25 is configured to enable the swinging frame 24 to rotate around the part of rotatable connection of the swinging frame and the track frame 21 through extension/retraction. The support roller assembly 23 can swing in a front-rear direction and a left-right direction relative to the track frame 21. When the road surface is uneven in the front-rear direction, the support roller assembly 23 is deflected relative to a rotation axis M4 and the axis of a pin shaft M6 (see Figure 5) to ensure that the track 22 is in contact with the road surface.

Referring to Figure 6, in some embodiments, the support roller assembly 23 comprises a first mounting frame 231, a first support roller 232, a second mounting frame 233, a second support roller 234, and a universal joint assembly 235. The first support roller 232 is rotatably mounted to the first mounting frame 231, and the axis of rotation is M1. The second mounting frame 233 is arranged spaced apart from the first mounting frame 231. The second support roller 234 is arranged spaced apart from the first support roller 232. The second support roller 234 is rotatably mounted on the second mounting frame 233, and the axis of rotation is M2. The universal joint assembly 235 is arranged between the first mounting frame 231 and the second mounting frame 233. The first mounting frame 231 is rotatably connected with one end of the universal joint assembly 235, the second mounting frame 233 is rotatably connected with the other end of the universal joint assembly 235, and both rotation axes are M3. The middle part of the universal joint mechanism 235 is rotatably connected with the other end of the swinging frame 24, and the rotation axis is M4. There is a plurality of directions in which the support roller assembly 23 can rotate, and the support roller assembly 23 has excellent flexibility.

When the road surface is uneven in the left-right direction, the first support roller 232 and the second support roller 234 will rotate together or independently around the rotation axis M3 of the support roller assembly 23 to ensure that the track 22 is in contact with the road surface. The support roller assembly 23 allows the crawler chassis apparatus to enable the bottom surface of the track to adapt to undulating changes of the road surface when the road surface is locally uneven, avoiding deflection of the chassis superstructure.

In some embodiments, the rotation axis M4 of the middle part of the universal joint assembly 235 and the other end of the swinging frame 24 is perpendicular to the traveling direction of the crawler traveling apparatus 2, and the traveling direction is parallel to M3.

The crawler chassis apparatus provided by the above-mentioned technical solution has multiple degrees of freedom in rotation, and during traveling of the track 22 chassis, by active adjustment of attitude, the track chain can be prevented from bearing a large load, thus increasing the service life of the track chain. The bottom surface of the track 22 can adapt to undulating changes of the road surface, thus avoiding deflection of the chassis superstructure and improving the operation quality of the chassis superstructure.

Some embodiments of the present disclosure provide a tracked vehicle comprising the crawler chassis apparatus provided by any technical solution of the present disclosure. The tracked vehicle may be construction equipment for uneven and inclined places, and in particular engineering machinery tracked products for working in places with a large slope.

In some embodiments, the tracked vehicle is a gutter cleaning apparatus, and twocrawler traveling mechanisms 2 of the tracked vehicle are located at different heights. The gutter cleaning apparatus is used for cleaning a gutter, which is very narrow, on either side of an expressway. The crawler chassis apparatus places one of the crawler traveling mechanisms 2 into the gutter and places the other crawler traveling apparatus 2 on the roadbed. The heights of the twocrawler traveling mechanisms 2 relative to the horizontal plane are different, but the chassis superstructure can be kept horizontal, flat and not inclined or operate at a certain operation angle. If the properties of the road surfaces on which the twocrawler traveling mechanisms 2 are located are different, determination of the road surface property introduced in the subsequent method steps is performed according to the road surface corresponding to each crawler traveling apparatus 2.

In some embodiments, the tracked vehicle is a tracked scissor-type aerial platform vehicle, such that the aerial platform vehicle can apply to a variety of different operating conditions.

When the tracked vehicle travels on an uneven road surface, the treads of the twocrawler traveling mechanisms 2 intersect, and the included angle is greater than 0° and less than 90°. The position of either of thecrawler traveling mechanisms 2 relative to the chassis mounting frame 1 can be adjusted by the attitude adjusting apparatus 3, eventually keeping the chassis superstructure horizontal.

The crawler chassis apparatus of the tracked vehicle can be adjusted in the following circumstances:
(1) When the road surface is inclined, the attitude of the chassis is adjusted by the track adjusting device, to control the chassis superstructure to stay in a horizontal state or at a certain operation angle.
(2) The tracked chassis may automatically adjust the attitude of the chassis superstructure in a static state or an operating state, improving the safety and efficiency of the traveling operation.
(3) When the road surface is locally uneven, the bottom surface of the track can adapt to undulating changes of the road surface, avoiding deflection of the superstructure and improving the operation quality of the superstructure.
(4) In operation on an uneven working surface, the chassis traveling devices on two sides are prevented from being twisted, which can ensure good contact of the bottom surface of the track with the road surface and improve the traveling and working safety.
(5) During traveling of the tracked chassis, the track chain can be prevented from bearing a large load by active or passive attitude adjustment, thus increasing the service life of the track chain.

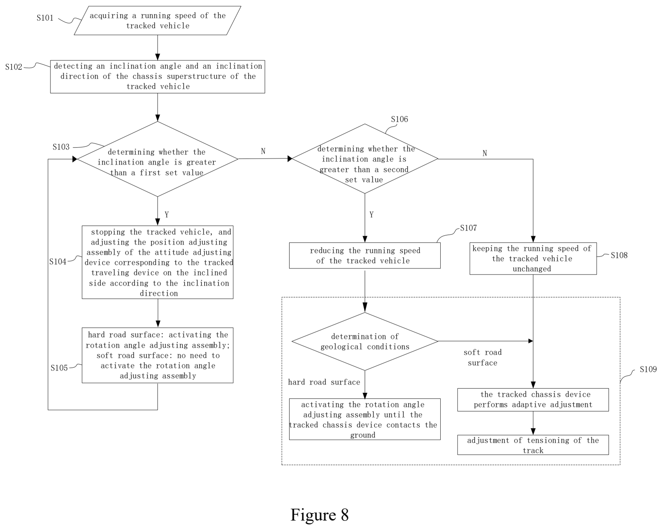

Referring to Figure 8, some embodiments of the present disclosure further provide a crawler chassis apparatus attitude adjusting method, comprising the following steps:
Step S101, acquiring the travel speed of the tracked vehicle provided by any technical solution of the present disclosure.
Step S102, detecting a tilt angle and a tilt direction of the chassis superstructure of the tracked vehicle.
Step 103, determining whether the tilt angle is greater than a first set value. The first set value is, for example, 10° ~ 12°, such as, 10°, 11°, 12°.
Step S104, if the tilt angle is greater than the first set value, stopping the tracked vehicle, and adjusting the position adjustment assembly 31 of the attitude adjusting apparatus 3 corresponding to the crawler traveling apparatus 2 on the inclined side according to the tilt direction.

After the above-mentioned step S104, the method further comprises the following step S105: if the road surface is hard, activating the angle adjustment assembly 32 of the crawler chassis apparatus until the crawler chassis apparatus is in contact with the road surface. If the road surface is soft, the crawler chassis apparatus can be adjusted adaptively, and there is no need to activate the angle adjustment assembly 32.

Hard road surfaces are a type of road surfaces with high strength and durability, such as cement concrete and asphalt concrete, mainly road surfaces for scenarios like roadways, airport runways, and parking lots. Hard road surfaces can effectively bear heavy traffic load and can provide favorable driving smoothness. Soft road surfaces refer to relatively soft road surfaces, such as a muddy road surface, grassland, hillside and the like. The support roller assembly 23 has great adaptability and can automatically adapt to the structure of a soft road surface. The crawler chassis apparatus of the tracked vehicle can at least partially invade the stratum of a soft road surface, whereas it is difficult for the crawler chassis apparatus to enter the stratum of a hard road surface.

In some embodiments, the crawler chassis apparatus attitude adjusting method further comprises the following step S106: if the tilt angle is less than or equal to the first set value, determining whether the tilt angle is greater than a second set value. The second set value is smaller than the first set value. The second set value is for example 5°.

Step S107: if the tilt angle is greater than the second set value, reducing the travel speed of the tracked vehicle. After reducing the travel speed of the tracked vehicle, in the case of a hard road surface, it is needed to activate the angle adjustment assembly 32 of the crawler chassis apparatus, until the crawler chassis apparatus contacts the road surface. In the case of a soft road surface, the crawler chassis apparatus can be adjusted adaptively, and there is no need to activate the angle adjustment assembly 32.

Step S108: if the tilt angle is greater than or equal to the second set value, keeping the travel speed of the tracked vehicle unchanged.

After Step S108, a step S109 is further comprised: if the road surface is hard, the angle adjustment assembly 32 of the crawler chassis apparatus is activated, until the crawler chassis apparatus is in contact with the road surface; if the road surface is soft, the crawler chassis apparatus makes adaptive adjustment.

The crawler chassis apparatus attitude adjusting method provided by the above-mentioned technical solution may further include a control system, a man-machine interaction system and a monitoring system. The control system controls a swinging adjusting device, a track deflection device and the chassis traveling device according to the geological condition and the chassis deflection angle, so that the tracked chassis performs attitude adjustment at a set speed. The man-machine interaction system can input the geological condition of the road surface into the control system. The monitoring system can monitor information such as the deflection angle of the tracked chassis, the travel speed of the chassis traveling device and the like in real time. The above-mentioned technical solution can achieve active or passive attitude adjustment of the tracked chassis in the process of traveling, improve the operation efficiency and ensure the safety of the operation process.

Some embodiments of the present disclosure provide a crawler chassis apparatus attitude adjusting system including a memory and a processor coupled to the memory, the processor configured to perform the crawler chassis apparatus attitude adjusting method in any of the preceding embodiments based on instructions stored in the memory.

The memory may include, for example, a system memory, a fixed nonvolatile storage medium, and the like. The system memory stores, for example, an operation system, an application program, a Boot Loader, and other programs.

Some embodiments of the present disclosure further provide a computer-readable storage medium having a computer program stored thereon, wherein the program, when executed by the processor, implements the crawler chassis apparatus attitude adjusting method in any of the above embodiments.

The processor described herein may be implemented or performed by a general-purpose processor, a digital signal processor (DSP), an application specific integrated circuit (ASIC), a field-programmable gate array (FPGA), or other programmable logic devices, discrete gate or transistor logic, discrete hardware components, or any combination thereof designed to perform the functions described herein. The general-purpose processor may be a microprocessor, but in alternative solutions, the processor may be any conventional processor, controller, microcontroller, or state machine. The processor may also be implemented as a combination of computing devices, e.g., a combination of a DSP and a microprocessor, a plurality of microprocessors, one or more microprocessors cooperating with the core of a DSP, or any other such configurations.

The storage medium may be any available medium that can be accessed by a computer. By way of example, and not limitation, such a computer-readable medium may include RAM, ROM, EEPROM, CD-ROM or other optical disk storage, magnetic disk storage or other magnetic storage devices, or any other medium which can be used to carry or store desired program codes in the form of instructions or data structures and which can be accessed by a computer. Any connection is also properly termed a computer-readable medium. For example, if the software is transmitted from a web site, a server, or other remote sources using coaxial cable, fiber optic cable, twisted-pair cable, Digital Subscriber Line (DSL), or wireless technologies such as infrared, radio and microwave, the coaxial cable, fiber optic cable, twisted-pair cable, DSL, or wireless technologies such as infrared, radio and microwave are included in the definition of "medium". Disks and discs, as used herein, include compact disc (CD), laser disc, optical disk, Digital Versatile Disk (DVD), floppy disk and blu-ray disc, wherein disks usually reproduce data in a magnetic manner, whereas discs reproduce data optically with laser. The above-mentioned combinations should also be included within the scope of computer-readable medium.

Those skilled in the art should understand that, the method embodiments of the present disclosure may be provided as a method, a system, or a computer program product. Accordingly, the present disclosure may take the form of an entirely hardware embodiment, an entirely software embodiment or an embodiment combining software and hardware aspects. Moreover, the present disclosure may take the form of a computer program product implemented on one or more computer-usable non-transitory storage media (including, but not limited to, magnetic disk storage, CD-ROM, optical storage, etc.) in which computer-usable program codes are contained.

The present disclosure is described with reference to a flowchart and/or block diagram of the method, the apparatus (system), and the computer program product according to some embodiments of the present disclosure. It is to be understood that each procedure and/or block of the flowchart and/or block diagram, and combinations of procedures and/or blocks in the flowchart and/or block diagram, can be implemented by computer program instructions. These computer program instructions may be provided to the processor of a general purpose computer, a special purpose computer, an embedded processor or other programmable data processing apparatuses to produce a machine, such that the instructions executed by the processor of the computer or other programmable data processing apparatuses create means for implementing the functions specified in one or more procedures of the flowchart and/or one or more blocks of the block diagram.

These computer program instructions may also be stored in a computer-readable memory that can direct a computer or other programmable data processing apparatuses to function in a particular manner, such that the instructions stored in the computer-readable memory produce an article of manufacture including an instruction device which implements the function specified in one or more procedures of the flowchart and/or one or more blocks of the block diagram.

These computer program instructions may also be loaded onto a computer or other programmable data processing apparatus to cause a series of operation steps to be executed on the computer or other programmable apparatus to produce a computer implemented process, such that the instructions executed on the computer or other programmable apparatus provide steps for implementing the functions specified in one or more procedures of the flowchart and/or one or more blocks of the block diagram.

In the description of the present disclosure, where possible, each technical feature may be combined with other technical features.

Finally, it should be noted that the above embodiments are only used for describing rather than limiting the technical solutions of the present disclosure. Although the present disclosure is described in detail with reference to the preferred embodiments, those of ordinary skill in the art should understand that they still can make modifications to the specific implementations in the present disclosure or make equivalent substitutions to part of technical features thereof; and such modifications and equivalent substitutions should be encompassed within the scope of the technical solutions sought for protection in the present disclosure so long as they do not depart from the spirit of the technical solutions of the present disclosure.

## Claims

1. A crawler chassis apparatus, comprising:
a chassis mounting frame (1), configured to be fixedly connected with a chassis superstructure (4);
at least two crawler traveling mechanisms (2), the chassis mounting frame (1) being located between two of the crawler traveling apparatuses (2), and each of the crawler traveling apparatuses (2) being configured to be walkable; and
at least one attitude adjusting apparatus (3), disposed between at least one of the crawler traveling apparatuses (2) and the chassis mounting frame (1), the attitude adjusting apparatus (3) being configured to adjust an attitude of the crawler traveling apparatus (2) connected thereto relative to the chassis mounting frame (1).

2. The crawler chassis apparatus according to claim 1, wherein the attitude adjusting apparatus (3) comprises:
a position adjustment assembly (31), disposed between the chassis mounting frame (1) and crawler traveling mechanisms (2), configured to change a horizontal distance and a vertical height of the crawler traveling mechanisms (2) relative to the chassis mounting frame (1); and
an angle adjustment assembly (32), disposed between the chassis mounting frame (1) and the crawler traveling mechanisms (2), configured to adjust a rotation angle of the crawler traveling apparatus (2) relative to the chassis mounting frame (1).

3. The crawler chassis apparatus according to claim 2, wherein the angle adjustment assembly (32), the position adjustment assembly (31), the chassis mounting frame (1) and the crawler traveling apparatuses (2) are configured to switch between the following states: forming a parallelogram mechanism, and forming a non-parallelogram mechanism.

4. The crawler chassis apparatus according to claim 2 or 3, wherein the position adjustment assembly (31) comprises:
a first cylinder (311), one end being rotatably connected with the chassis mounting frame (1), and the other end being rotatably connected with the crawler traveling apparatus (2); and
a first link (312) arranged spaced apart from the first cylinder (311); one end of the first link (312) being rotatably connected with the chassis mounting frame (1), and the other end of the first link (312) being rotatably connected with the crawler traveling apparatus (2).

5. The crawler chassis apparatus according to claim 4, wherein the first cylinder (311) is connected to the chassis mounting frame (1) at a first hinge point, the first link (312) is connected to the chassis mounting frame (1) at a second hinge point, and the first hinge point and the second hinge point are located at different positions around the chassis mounting frame (1).

6. The crawler chassis apparatus according to claim 4 or 5, wherein the other end of the first link (312) is rotatably connected with the crawler traveling apparatus (2) by a first pin shaft (313); the angle adjustment assembly (32) comprises:
a second cylinder (321), one end being rotatably connected with the chassis mounting frame (1), and the other end of the second cylinder (321) being rotatably connected with the crawler traveling apparatus (2); the first pin shaft (313) is parallel to the second pin shaft (314);
wherein the attitude adjusting apparatus (3) further comprises: a first connecting plate (33) and a second connecting plate (34) arranged in parallel; the first connecting plate (33) and the second connecting plate (34) are both fixedly connected with the crawler traveling apparatus (2); one end of the first connecting plate (33) is rotatably connected with the first pin shaft (313), and the other end of the first connecting plate (33) is rotatably connected with the second pin shaft (314); one end of the second connecting plate (34) is rotatably connected with the first pin shaft (313), and the other end of the second connecting plate (34) is rotatably connected with the second pin shaft (314).

7. The crawler chassis apparatus according to claim 6, wherein there are two first links (312), there are also two second cylinders (321), and the first links (312) and the second cylinders (321) are in one-to-one correspondence; the first cylinder (311) is located between the two first links (312).

8. The crawler chassis apparatus according to claim 7, wherein a third pin shaft (315) is mounted at the other end of the first cylinder (311), and a rotation axis of the third pin shaft (315) coincides with a rotation axis of the first pin shaft (313).

9. The crawler chassis apparatus according to any one of claims 1-8, wherein there are two attitude adjusting apparatuses (3), the crawler traveling apparatuses (2) are divided into two groups, and one attitude adjusting apparatus (3) is mounted between each group of the crawler traveling apparatuses (2) and the chassis mounting frame (1).

10. The crawler chassis apparatus according to any one of claims 1-9, wherein each crawler traveling apparatus (2) comprises:
a track frame (21), the attitude adjusting apparatus (3) being mounted to the track frame (21) ;
a track (22) mounted to the track frame (21) ;
a support roller assembly (23) pressing the track (22) ;
a swinging frame (24), one end being rotatably connected with the track frame (21), the support roller assembly (23) being mounted at the other end, and the swinging frame (24) rotatable relative to the track frame (21) to drive the support roller assembly (23) to press the track (22); and
a telescopic assembly (25), one end being rotatably mounted to the track frame (21), and the other end being rotatably connected with the middle part of the swinging frame (24); the telescopic assembly (25) being configured to enable the swinging frame (24) to rotate around the part of rotatable connection of the swinging frame and the track frame (21) through extension/retraction.

11. The crawler chassis apparatus according to claim 10, wherein the support roller assembly (23) comprises:
a first mounting frame (231) arranged adjacent to the track (22);
a first support roller (232) rotatably mounted to the first mounting frame (231);
a second mounting frame (233) arranged spaced apart from the first mounting frame (231);
a second support roller (234) arranged spaced apart from the first support roller (232); the second support roller (234) being rotatably mounted to the second mounting frame (233); and
a universal joint assembly (235) arranged between the first mounting frame (231) and the second mounting frame (233), the first mounting frame (231) being rotatably connected with one end of the universal joint assembly (235), and the second mounting frame (233) being rotatably connected with the other end of the universal joint assembly (235); the middle part of the universal joint assembly (235) being rotatably connected with the other end of the swinging frame (24).

12. The crawler chassis apparatus according to claim 11, wherein the rotatable shaft between the middle part of the universal joint assembly (235) and the other end of the swinging frame (24) is perpendicular to a traveling direction of the crawler traveling apparatus (2).

13. A tracked vehicle comprising the crawler chassis apparatus according any one of claims 1-12.

14. The tracked vehicle according to claim 13, wherein the tracked vehicle is a gutter cleaning apparatus.

15. The tracked vehicle according to claim 13 or 14, wherein two crawler traveling apparatuses (2) of the tracked vehicle are located at different heights.

16. The tracked vehicle according to any one of claims 13-15, wherein the treads of two of the crawler traveling apparatuses (2) intersect, and an comprised angle between them is greater than 0° and less than 90°.

17. A method for adjusting an attitude of a crawler chassis apparatus, comprising the following steps:
acquiring a travel speed of the tracked vehicle according to any one of claims 13-16;
detecting a tilt angle and a tilt direction of a chassis superstructure of the tracked vehicle;
determining whether the tilt angle is greater than a first set value;
if the tilt angle is greater than the first set value, stopping the tracked vehicle, and adjusting the position adjustment assembly (31) of the attitude adjusting apparatus (3) corresponding to the crawler traveling apparatus (2) on the inclined side according to the tilt direction.

18. The method for adjusting an attitude of a crawler chassis apparatus according to claim 17, wherein after stopping the tracked vehicle, the method further comprises the following step:
if the road surface is hard, activating the angle adjustment assembly (32) of the crawler chassis apparatus until the crawler chassis apparatus is in contact with the road surface.

19. The method for adjusting an attitude of a crawler chassis apparatus according to claim 17 or 18, further comprising the following step:
if the tilt angle is less than or equal to the first set value, determining whether the tilt angle is larger than a second set value;
if the tilt angle is greater than the second set value, reducing the travel speed of the tracked vehicle;
if the road surface is hard, activating the angle adjustment assembly (32) of the crawler chassis apparatus until the crawler chassis apparatus is in contact with the road surface; if the road surface is soft, the crawler chassis apparatus performs adaptive adjustment.

20. The method for adjusting an attitude of a crawler chassis apparatus according to claim 19, wherein
if the tilt angle is less than or equal to the second set value, the travel speed of the tracked vehicle remains unchanged;
if the road surface is hard, activating the angle adjustment assembly (32) of the crawler chassis apparatus until the crawler chassis apparatus is in contact with the road surface; if the road surface is soft, the crawler chassis apparatus performs adaptive adjustment.

21. A crawler chassis apparatus attitude adjusting system, comprising:
a memory; and
a processor coupled to the memory, the processor being configured to perform the method for adjusting an attitude of a crawler chassis apparatus according to any one of claims 17-20 based on instructions stored in the memory.

22. A computer-readable storage medium, on which a computer program is stored, wherein the program, when executed by the processor, implements the method for adjusting an attitude of a crawler chassis apparatus according to any one of claims 17-20.
